# EUROPEAN PATENT APPLICATION

(11) **EP 4 593 263 A1**
(43) Date of publication of application: **30.07.2025**
(21) Application number: 25153917.7
(22) Date of filing: 24.01.2025
(51) Int. Cl.: H02K 9/08, H02K 1/32, H02K 1/276

(54) **ROTOR ASSEMBLY AND ELECTRIC MACHINE INCLUDING THE SAME**

(30) Priority: 27.01.2024 US 202463625960 P
(71) Applicant: Borgwarner Inc., Auburn Hills, Michigan 48326 (US)
(72) Inventor: DIKO, Andi, Auburn Hills, MI, 48326 (US); MAYER, Andreas WP, Clarkston, MI, 48346 (US); ISHIHARA, Mitsuru, Rochester Hills, MI, 48304 (US)
(74) Representative: Peterreins Schley

(57) **Abstract**

A rotor assembly includes a rotor defining a first cooling duct and a second cooling duct. The rotor assembly also includes a first impeller defining an inlet opening and an outlet opening, and a second impeller defining an inlet opening and an outlet opening. A first outlet radius of the outlet opening of the second impeller is greater than a first inlet radius of the inlet opening of the first impeller such that the first and second impellers are adapted to direct air flow in a first direction through the first cooling duct. A first outlet radius of the outlet opening of the first impeller is greater than a first inlet radius of the inlet opening of the second impeller such that the first and second impellers are adapted to direct airflow in a second direction opposite the first direction through the second cooling duct.

## Description

### CROSS-REFERENCE TO RELATED APPLICATIONS

This application claims priority to and all the benefits of United States Provisional Application No. 63/625,960, filed January 27, 2024, which is hereby incorporated by reference in its entirety.

### BACKGROUND OF THE INVENTION

### 1. Field of the Invention

The subject invention relates to a rotor assembly and, in particular, a rotor assembly for use in an electric machine.

### 2. Description of Related Art

Typical electric machines, such as for use in a vehicle, include a rotor assembly including a rotor extending along and rotatable about a rotor axis, a shaft extending along the rotor axis, and a stator coupled to and disposed about the rotor with respect to the rotor axis. As performance and efficiency demands continue to increase for vehicles, the demand on electric machines has increased. For example, with higher output from electric machines, desired rotational speed of the shaft has increased, which then increases the need for improved cooling and balancing of the electric machine and, in particular, the rotor assembly.

To this end, there remains a need for an improved rotor assembly for an electric machine.

### SUMMARY OF THE INVENTION

A rotor assembly for use in an electric machine includes a rotor extending along and adapted to be rotatable about a rotor axis. The rotor has a first rotor end and a second rotor end spaced from the first rotor end with respect to the rotor axis. The rotor defines a first cooling duct extending from the first rotor end to the second rotor end. The rotor defines a second cooling duct extending from the first rotor end to the second rotor end. The rotor assembly also includes a first impeller coupled to the first rotor end. The first impeller defines an inlet opening aligned with the first cooling duct. The first impeller defines an outlet opening aligned with the second cooling duct. The rotor assembly additionally includes a second impeller coupled to the second rotor end such that the rotor is disposed between the first impeller and the second impeller with respect to the rotor axis. The second impeller defines an inlet opening aligned with the second cooling duct and the outlet opening of the first impeller. The second impeller defines an outlet opening aligned with the first cooling duct and the inlet opening of said first impeller. The inlet opening of the first impeller has an inlet geometric center. The inlet geometric center of the inlet opening of the first impeller defines a first inlet radius between the inlet geometric center of the inlet opening of the first impeller and the rotor axis. The outlet opening of the second impeller has an outlet geometric center. The outlet geometric center of the outlet opening of the second impeller defines a first outlet radius between the outlet geometric center of the outlet opening of the second impeller and the rotor axis. The inlet opening of the second impeller has an inlet geometric center. The inlet geometric center of the inlet opening of the second impeller defines a first inlet radius between the inlet geometric center of the inlet opening of the second impeller and the rotor axis. The outlet opening of the first impeller has an outlet geometric center. The outlet geometric center of the outlet opening of the first impeller defines a first outlet radius between the outlet geometric center of the outlet opening of the first impeller and the rotor axis. The first outlet radius defined between the outlet geometric center of the outlet opening of the second impeller and the rotor axis is greater than the first inlet radius defined between the inlet geometric center of the inlet opening of the first impeller and the rotor axis such that the first and second impellers are adapted to direct air flow in a first direction through the first cooling duct from the first rotor end to the second rotor end when the rotor, the first impeller, and the second impeller rotate about the rotor axis. The first outlet radius defined between the outlet geometric center of the outlet opening of the first impeller and the rotor axis is greater than the first inlet radius defined between the inlet geometric center of the inlet opening of the second impeller and the rotor axis such that the first and second impellers are adapted to direct airflow in a second direction opposite the first direction through the second cooling duct from the second rotor end to the first rotor end when the rotor, the first impeller, and the second impeller rotate about said rotor axis.

### BRIEF DESCRIPTION OF THE DRAWINGS

Other advantages of the present disclosure will be readily appreciated, as the same becomes better understood by reference to the following detailed description when considered in connection with the accompanying drawings.
FIG. 1 is a perspective view of an electric machine including a rotor assembly.
FIG. 2 is a perspective view of the electric machine with a housing of the electric machine removed.
FIG. 3 is a front view of the electric machine.
FIG. 4 is an exploded view of the rotor assembly, with the rotor assembly including a rotor extending along a rotor axis, a first impeller, and a second impeller.
FIG. 5 is a perspective view of the first and second impellers illustrating air flow through cooling ducts defined by the rotor.
FIG. 6 is a front view of the first impeller.
FIG. 7 is a rear view of the first impeller.
FIG. 8 is a rear view of the second impeller.
FIG. 9 is a front view of the second impeller.
FIG. 10 is a perspective view of another embodiment of the first and second impellers.
FIG. 11 is a front view of the first impeller of FIG. 10.
FIG. 12 is a rear view of the first impeller of FIG. 10.
FIG. 13 is a rear view of the second impeller of FIG. 10.
FIG. 14 is a front view of the second impeller of FIG. 10.
FIG. 15 is a perspective view of the first impeller of FIG. 10.
FIG. 16 is a perspective view of the second impeller of FIG. 10.
FIG. 17 is a rear view of the second impeller of FIG. 8.
FIG. 18 is a rear view of the second impeller of FIG. 13.

### DETAILED DESCRIPTION OF THE INVENTION

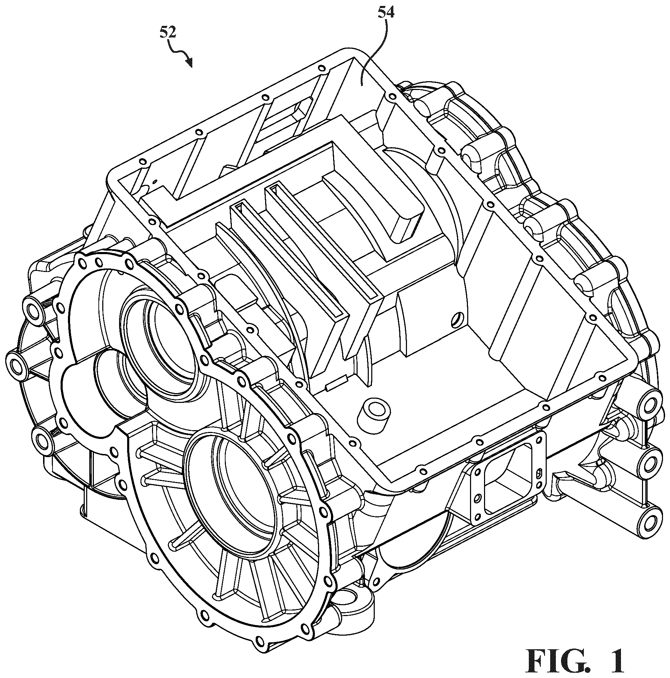

With reference to the Figures, wherein like numerals indicate like parts throughout the several views, a rotor assembly 50 for use in an electric machine 52 is shown in FIG. 1. The electric machine 52 may include a machine housing 54 defining a machine housing interior.

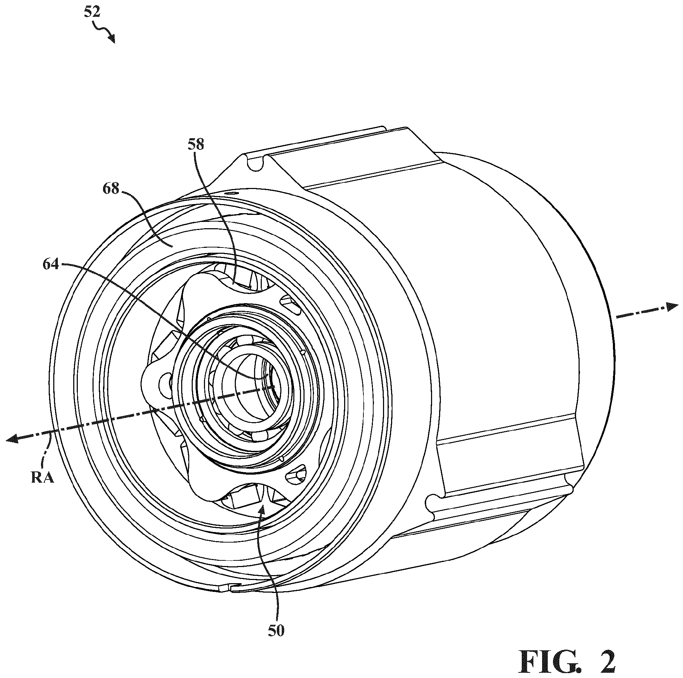

With reference to FIGS. 2-4, the rotor assembly 50 includes a rotor 58 that extends along and is adapted to be rotatable about a rotor axis RA. The rotor 58 has a first rotor end 60 and a second rotor end 62 spaced from the first rotor end 60 with respect to the rotor axis RA. The rotor 58 may be comprised of lamination stacks.

The electric machine 52 includes the rotor assembly 50, a shaft 64 extending along the rotor axis RA, wherein the rotor 58 defines a rotor interior 66 and the shaft 64 is disposed in the rotor interior 66 and coupled to the rotor 58, and a stator 68 coupled to and disposed about the rotor 58 with respect to the rotor axis RA. The shaft 64 may be integral with the rotor 58 (i.e., one-piece) or the shaft 64 may be a separate component from the rotor 58 (i.e., two or more components).

The rotor assembly 50 and, therefore, the electric machine 52, may be used in any suitable application, such as in a vehicle, traction electric machines, turbomachinery, boats, trains, and the like. The electric machine 52 may be used in any tractive and/or electrical power generating. In other words, the electric machine 52 may be configured as a motor and/or a generator. The rotor 58 and, therefore, the shaft 64 may be configured to rotate greater than 18,000 RPM, greater than 19,000 RPM, greater than 20,000 RPM, greater than 21,000 RPM, greater than 22,000 RPM, greater than 23,000 RPM, greater than 24,000 RPM, greater than 25,000 RPM, greater than 26,000 RPM, and/or greater than 27,000 RPM during operation of the electric machine 52.

The rotor 58 defines a first cooling duct 70 extending from the first rotor end 60 to the second rotor end 62, and a second cooling duct 72 extending from the first rotor end 60 to the second rotor end 62.

The rotor assembly also includes a first impeller 74 coupled to the first rotor end 60. The first impeller 74 defines an inlet opening 76 aligned with the first cooling duct 70, and an outlet opening 78 aligned with the second cooling duct 72. The rotor assembly 50 further includes a second impeller 80 that is coupled to the second rotor end 62 such that the rotor 58 is disposed between the first impeller 74 and the second impeller 80 with respect to the rotor axis RA. The second impeller 80 defines an inlet opening 82 aligned with the second cooling duct 72 and the outlet opening 78 of the first impeller 74, and an outlet opening 84 aligned with the first cooling duct 70 and the inlet opening 76 of the first impeller 74.

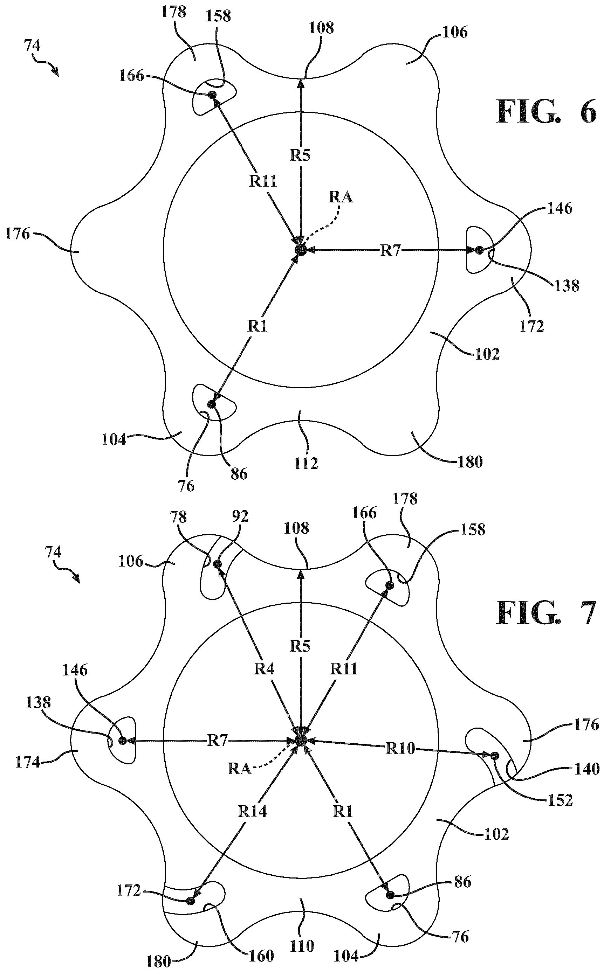

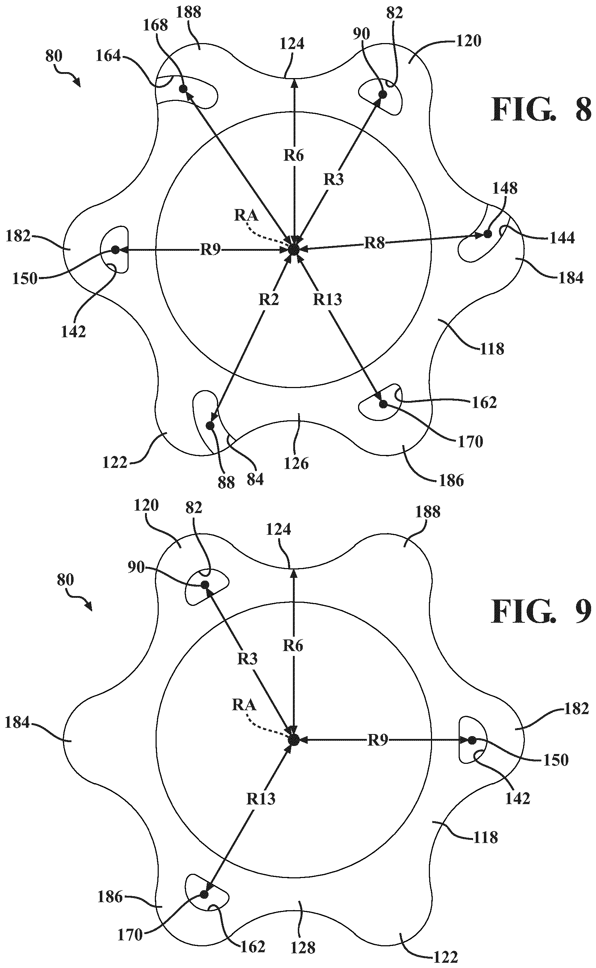

With particular reference to FIGS. 6-9, the inlet opening 76 of the first impeller 74 has an inlet geometric center 86, which defines a first inlet radius R1 between the inlet geometric center 86 of the inlet opening 76 of the first impeller 74 and the rotor axis RA. Similarly, the outlet opening 84 of the second impeller 80 has an outlet geometric center 88, which defines a first outlet radius R2 between the outlet geometric center 88 of the outlet opening 84 of the second impeller 80 and the rotor axis RA. The inlet opening 82 of the second impeller 80 has an inlet geometric center 90, with the inlet geometric center 90 of the inlet opening 82 of the second impeller 80 defining a first inlet radius R3 between the inlet geometric center 90 of the inlet opening 82 of the second impeller 80 and the rotor axis RA. The outlet opening 78 of the first impeller 74 has an outlet geometric center 92, with the outlet geometric center 92 of the outlet opening 78 of the first impeller 74 defining a first outlet radius R4 between the outlet geometric center 92 of the outlet opening 78 of the first impeller 74 and the rotor axis RA.

The first outlet radius R2 defined between the outlet geometric center 88 of the outlet opening 84 of the second impeller 80 and the rotor axis RA is greater than the first inlet radius R1 defined between the inlet geometric center 86 of the inlet opening 76 of the first impeller 74 and the rotor axis RA such that the first and second impellers 74, 80 are adapted to direct air flow in a first direction through the first cooling duct 70 from the first rotor end 60 to the second rotor end 62 when the rotor 58, the first impeller 74, and the second impeller 80 rotate about the rotor axis RA. Similarly, the first outlet radius R4 defined between the outlet geometric center 92 of the outlet opening 78 of the first impeller 74 and the rotor axis RA is greater than the first inlet radius R3 defined between the inlet geometric center 90 of the inlet opening 82 of the second impeller 80 and the rotor axis RA such that the first and second impellers 74, 80 are adapted to direct airflow in a second direction opposite the first direction through the second cooling duct 72 from the second rotor end 62 to the first rotor end 60 when the rotor 58, the first impeller 74, and the second impeller 80 rotate about the rotor axis RA.

Having (1) the first impeller 74 defining the inlet opening 76 aligned with the first cooling duct 70, and defining the outlet opening 78 aligned with the second cooling duct 72, (2) the he second impeller 80 defining the inlet opening 82 aligned with the second cooling duct 72 and the outlet opening 78 of the first impeller 74, and defining the outlet opening 84 aligned with the first cooling duct 70 and the inlet opening 76 of the first impeller 74, and (3) the first outlet radius R2 defined between the outlet geometric center 88 of the outlet opening 84 of the second impeller 80 and the rotor axis RA being greater than the first inlet radius R1 defined between the inlet geometric center 86 of the inlet opening 76 of the first impeller 74 and the rotor axis RA, and the first outlet radius R4 defined between the outlet geometric center 92 of the outlet opening 78 of the first impeller 74 and the rotor axis RA being greater than the first inlet radius R3 defined between the inlet geometric center 90 of the inlet opening 82 of the second impeller 80 and the rotor axis RA offers several advantages. First, as described above, this allows air flow through the first and second cooling ducts 70, 72 to flow in opposite directions from one another, which further cools the rotor 58 during operation of the electric machine 52. Second, inlet opening 76 defined by the first impeller 74 and the outlet opening 84 defined by the second impeller 80 act as a nozzle by drawing and forcing air from the inlet opening 76 to the outlet opening 84, and the inlet opening 82 defined by the second impeller 80 and outlet opening 78 defined by the first impeller 74 act as a nozzle by drawing and forcing air from the inlet opening 82 to the outlet opening 78. To further act as a nozzle, the cross-sectional area of the inlet opening 76 with respect to the rotor axis RA defined by the first impeller 74 may be greater than the cross-sectional area of the outlet opening 84 defined by the second impeller 80. Third, the first and second impellers 74, 80 may also be configured as balancing discs such that material may be subtracted or added from the first and/or second impellers 74, 80 for balancing the rotor 58 with respect to the shaft 64 when the shaft 64 rotates about the rotor axis RA during operation of the electric machine 52.

Typically, the first impeller 74, the second impeller 80, and the rotor 58 are adapted to rotate in unison about the rotor axis RA during operation of the electric machine 52. The first rotor end 60 has a first rotor face 94 and the second rotor end 62 has a second rotor face 96 facing opposite the first rotor face 94 with respect to the rotor axis RA. The first impeller 74 may be engaged with the first rotor face 94 and the second impeller 80 may be engaged with the second rotor face 96. In one embodiment, the first impeller 74 is directly engaged with the first rotor face 94 and the second impeller 80 is directly engaged with the second rotor face 96.

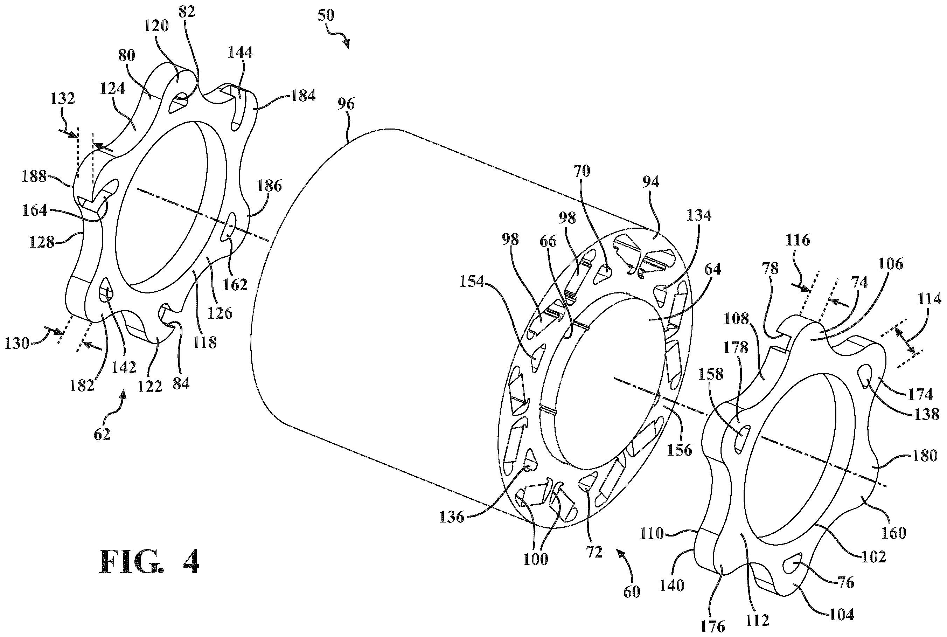

As shown in FIG. 4, the rotor assembly 50 may include a plurality of magnets 98 disposed in the rotor 58. The rotor 58 can define a plurality of magnet channels 100 adjacent the magnets 98, and the plurality of magnet channels 100 can be filled with an injection molded material. Alternatively, the plurality of magnet channels 100 can be hollow. Although not shown in the FIGS., it is to be appreciated that the first impeller 74 may define a magnet opening configured to align with at least one of the magnet channels 100 of the plurality of magnet channels 100, and the second impeller 80 may define a magnet opening configured to align with at least one of the magnet channels 100 of the plurality of magnet channels 100, particularly when the plurality of magnet channels 100 are hollow. Having the plurality of magnet channels 100 being hollow provides additional cooling for the rotor 58.

With reference to FIGS. 6-9, the first impeller 74 may have a first hub portion 102 and a first impeller arm 104 extending from the first hub portion 102 and away from the rotor axis RA. When present, the first impeller arm 104 may define the inlet opening 76 of the first impeller 74. The first impeller 74 may also have a second impeller arm 106 extending from the first hub portion 102 away from the rotor axis RA and defining the outlet opening 78 of the first impeller 74.

The first hub portion 102 may have an outer first hub surface 108 disposed between the first and second impeller arms 104, 106 of the first impeller 74. The outer first hub surface 108 defines an outer first hub radius R5 between the outer first hub surface 108 and the rotor axis RA. The first and second impeller arms 104, 106 of the first impeller 74 protrude away from the outer first hub surface 108 with respect to the rotor axis RA.

The outlet opening 78 of the first impeller 74 may be disposed outside of the outer first hub radius R5 with respect to the rotor axis RA. The inlet opening 76 of the first impeller 74 may also be disposed outside of the outer first hub radius R5 with respect to the rotor axis RA.

The outlet opening 78 of the first impeller 74 may have a curved or angled configuration with respect to the rotor axis. In such embodiments, the outlet opening 78 of the first impeller 74 may be curved or angled in a clockwise or counterclockwise configuration with respect to the rotor axis RA. Alternatively, the outlet opening 78 of the first impeller 74 may have a straight configuration with respect to the rotor axis RA.

The first impeller 74 may have a first impeller surface 110 facing the rotor 58, and the outlet opening 78 of the first impeller 74 may be defined by the first impeller surface 110 of the first impeller 74. The outlet opening 78 of the first impeller 74 may be partially defined through the first impeller 74. The first impeller 74 also has a second impeller surface 112 opposite the first impeller surface 110 of the first impeller 74 with respect to the rotor axis RA. The first impeller 74 has a first impeller thickness 114 defined between the first and second impeller surfaces 110, 112 of the first impeller 74, and the outlet opening 78 of the first impeller 74 has an outlet depth 116 with respect to the rotor axis RA that is less than the first impeller thickness 114.

The inlet opening 76 of the first impeller 74 may have a symmetrical configuration with respect to the rotor axis RA. For example, the inlet opening 76 of the first impeller 74 may have a semi-circle configuration. The first impeller arm 104 of the first impeller 74 and the second impeller arm 106 of the first impeller 74 may be radially spaced 180 degrees from one another with respect to the rotor axis.

Similar to the first impeller 74, the second impeller 80 may have a second hub portion 118 and may include a first impeller arm 120 extending from the second hub portion 118 and away from the rotor axis RA, defining the inlet opening 82 of the second impeller 80, and a second impeller arm 122 extending from the second hub portion 118 away from the rotor axis RA, defining the outlet opening 84 of the second impeller 80. The second hub portion 118 has an outer second hub surface 124 disposed between the first and second impeller arms 120, 122 of the second impeller 80. The outer second hub surface 124 defines an outer second hub radius R6 between the outer second hub surface 124 and the rotor axis RA, and the first and second impeller arms 120, 122 of the second impeller 80 protrude away from the outer second hub surface 124 with respect to the rotor axis RA.

The outlet opening 84 of the second impeller 80 is disposed outside of the outer second hub radius R6 with respect to the rotor axis RA. The inlet opening 82 of the second impeller 80 may also disposed outside of the outer second hub radius R6 with respect to the rotor axis RA. The outlet opening 84 of the second impeller 80 may have a curved or angled configuration with respect to the rotor axis RA and may be curved or angled in a clockwise or counterclockwise configuration with respect to the rotor axis RA. Alternatively, the outlet opening 84 of the second impeller 80 may have a straight configuration with respect to the rotor axis RA.

The second impeller 80 has a first impeller surface 126 facing the rotor 58, and the outlet opening 84 of the second impeller 80 may be defined by the second impeller surface 128 of the second impeller 80. The outlet opening 84 of the second impeller 80 may be partially defined through the second impeller 80. The second impeller 80 also has a second impeller surface 128 opposite the first impeller surface 126 of the second impeller 80 with respect to the rotor axis RA. The second impeller 80 has a second impeller thickness 130 defined between the first and second impeller surfaces 126, 128 of the second impeller 80, and the outlet opening 84 of the second impeller 80 has an outlet depth 132 with respect to the rotor axis RA that may be less than the second impeller thickness 130.

In one embodiment, the rotor 58 may define a third cooling duct 134 extending from the first rotor end 60 to the second rotor end 62, and a fourth cooling duct 136 extending from the first rotor end 60 to the second rotor end 62. The first impeller 74 may define a second inlet opening 138 aligned with the third cooling duct 134, and a second outlet opening 140 aligned with the fourth cooling duct 136. The second impeller 80 may define a second inlet opening 142 aligned with the fourth cooling duct 136 and the second outlet opening 144 of the first impeller 74, and a second outlet opening 144 aligned with the third cooling duct 134 and the second inlet opening 138 of the first impeller 74.

The second inlet opening 138 of the first impeller 74 has an inlet geometric center 146, which defines a second inlet radius R7 between the inlet geometric center 146 of the second inlet opening 138 of the first impeller 74 and the rotor axis RA. Similarly, the second outlet opening 144 of the second impeller 80 has an outlet geometric center 148, which defines a second outlet radius R8 between the outlet geometric center 148 of the second outlet opening 144 of the second impeller 80 and the rotor axis RA. The second inlet opening 142 of the second impeller 80 has an inlet geometric center 150. The inlet geometric center 150 of the second inlet opening 142 of the second impeller 80 and the rotor axis RA define a second inlet radius R9 therebetween. The second outlet opening 140 of the first impeller 74 also defines an outlet geometric center 152, with the outlet geometric center 152 of the second outlet opening of the first impeller 74 defining a second outlet radius R10 between the outlet geometric center 152 of the second outlet opening 140 of the first impeller 74 and the rotor axis RA.

The second outlet radius R8 defined between the outlet geometric center 148 of the second outlet opening 144 of the second impeller 80 may be greater than the second inlet radius R7 defined between the inlet geometric center 146 of the second inlet opening 138 of the first impeller 74 such that the first and second impellers 74, 80 are adapted to direct air flow in the first direction through the third cooling duct 134 from the first rotor end 60 to the second rotor end 62 when the rotor 58, the first impeller 74, and the second impeller 80 rotate about the rotor axis RA. Similarly, the second outlet radius R10 defined between the outlet geometric center 152 of the second outlet opening 140 of the first impeller 74 may be greater than the second inlet radius R9 defined between the inlet geometric center 150 of the second inlet opening 142 of the second impeller 80 such that the first and second impellers 74, 80 are adapted to direct airflow in the second direction opposite the first direction through the fourth cooling duct 136 from the second rotor end 62 to the first rotor end 60 when the rotor 58, the first impeller 74, and the second impeller 80 rotate about the rotor axis RA.

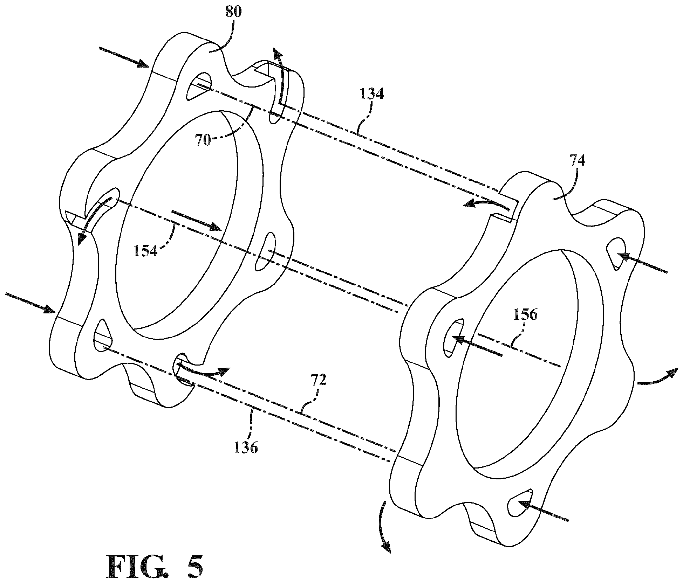

As shown in FIGS. 4 and 5, the rotor 58 may also define a fifth cooling duct 154 extending from the first rotor end 60 to the second rotor end 62, and a sixth cooling duct 156 extending from the first rotor end 60 to the second rotor end 62. The first impeller 74 may define a third inlet opening 158 aligned with the fifth cooling duct 154, and a third outlet opening 160 aligned with the sixth cooling duct 156. The second impeller 80 may define a third inlet opening 162 aligned with the sixth cooling duct 156 and the third outlet opening 160 of the first impeller 74, and a third outlet opening 164 aligned with the fifth cooling duct 154 and the third inlet opening 158 of the first impeller 74.

With reference again to FIGS. 6-9, the third inlet opening 158 of the first impeller 74 has an inlet geometric center 166, which defines a third inlet radius R11 between the inlet geometric center 166 of the third inlet opening 158 of the first impeller 74 and the rotor axis RA. Similarly, the third outlet opening 164 of the second impeller 80 has an outlet geometric center 168, which defines a third outlet radius R12 between the outlet geometric center 168 of the third outlet opening 164 of the second impeller 80 and the rotor axis RA. The third inlet opening 162 of the second impeller 80 has an inlet geometric center 170, with the inlet geometric center 170 of the third inlet opening 162 of the second impeller 80 defining a third inlet radius R13 between the inlet geometric center 170 of the third inlet opening 162 of the second impeller 80 and the rotor axis RA. The third outlet opening 160 of the first impeller 74 has an outlet geometric center 172, with the outlet geometric center 172 of the third outlet opening 160 of the first impeller 74 defining a third outlet radius R14 between the outlet geometric center 172 of the third outlet opening 160 of the first impeller 74 and the rotor axis RA.

The third outlet radius R12 defined between the outlet geometric center 168 of the third outlet opening 164 of the second impeller 80 may be greater than the third inlet radius R11 defined between the inlet geometric center 166 of the third inlet opening 158 of the first impeller 74 such that the first and second impellers 74, 80 are adapted to direct air flow in the first direction through the fifth cooling duct 154 from the first rotor end 60 to the second rotor end 62 when the rotor 58, the first impeller 74, and the second impeller 80 rotate about the rotor axis RA. Similarly, the third outlet radius R14 defined between the outlet geometric center 172 of the third outlet opening 160 of the first impeller 74 is greater than the third inlet radius R13 defined between the inlet geometric center 170 of the third inlet opening 162 of the second impeller 80 such that the first and second impellers 74, 80 are adapted to direct airflow in the second direction opposite the first direction through the sixth cooling duct 156 from the second rotor end 62 to the first rotor end 60 when the rotor 58, the first impeller 74, and the second impeller 80 rotate about the rotor axis.

In one embodiment, the first inlet opening 76 of the first impeller 74, the first outlet opening 78 of the first impeller 74, the second inlet opening 138 of the first impeller 74, the second outlet opening of the first impeller 74, the third inlet opening 158 of the first impeller 74, and the third outlet opening 160 of the first impeller 74 are equally radially spaced from one another with respect to and about the rotor axis RA. Similarly, the first inlet opening 82 of the second impeller 80, the first outlet opening 84 of the second impeller 80, the second inlet opening 142 of the second impeller 80, the second outlet opening 144 of the second impeller 80, the third inlet opening 162 of the second impeller 80, and the third outlet opening 164 of the second impeller 80 can be equally radially spaced from one another with respect to and about the rotor axis RA.

The first impeller 74 may include comprise a third impeller arm 174 extending from the first hub portion 102 and away from the rotor axis RA with the third impeller arm 174 of the first impeller 74 defining the second inlet opening 138 of the first impeller 74. The first impeller 74 may include a fourth impeller arm 176 extending from the first hub portion 102 away from the rotor axis RA with the fourth impeller arm 176 of the first impeller 74 defining the second outlet opening 140 of the first impeller 74. The first impeller 74 may include a fifth impeller arm 178 extending from the first hub portion 102 away from the rotor axis RA with the fifth impeller arm 178 of the first impeller 74 defining the third inlet opening 158 of the first impeller 74. The first impeller 74 may include a sixth impeller arm 180 extending from the first hub portion 102 away from the rotor axis RA with the sixth impeller arm 180 defining the third outlet opening 160 of the first impeller 74. Similarly, the second impeller 80 may include a third impeller arm 182 extending from the second hub portion 118 and away from the rotor axis RA with the third impeller arm 182 of the second impeller 80 defining the second inlet opening 142 of the second impeller 80. The second impeller 80 may include a fourth impeller arm 184 extending from the second hub portion 118 away from the rotor axis RA with the fourth impeller arm 184 of the second impeller 80 defining the second outlet opening 144 of the second impeller 80. The second impeller 80 may include a fifth impeller arm 186 extending from the second hub portion 118 away from the rotor axis RA with the fifth impeller arm 186 of the second impeller 80 defining the third inlet opening 162 of the second impeller 80. The second impeller 80 may include a sixth impeller arm 188 extending from the second hub portion 118 away from the rotor axis RA with the sixth impeller arm 188 defining the third outlet opening 164 of the second impeller 80.

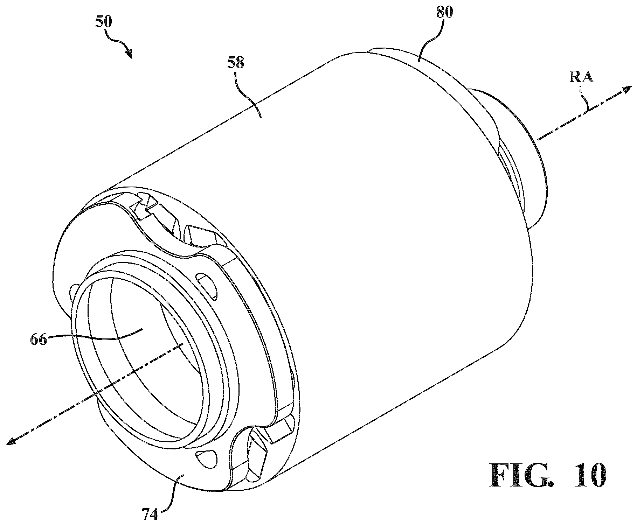

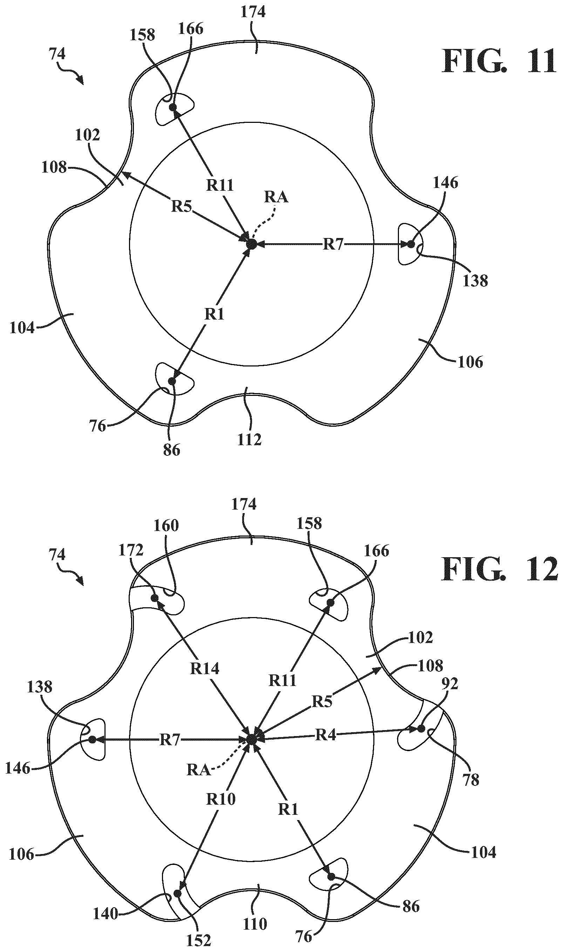

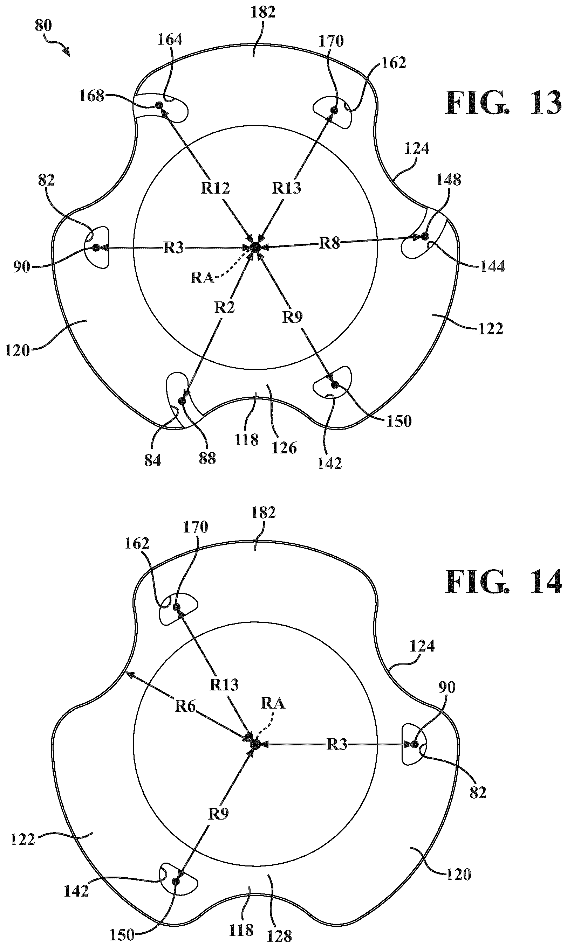

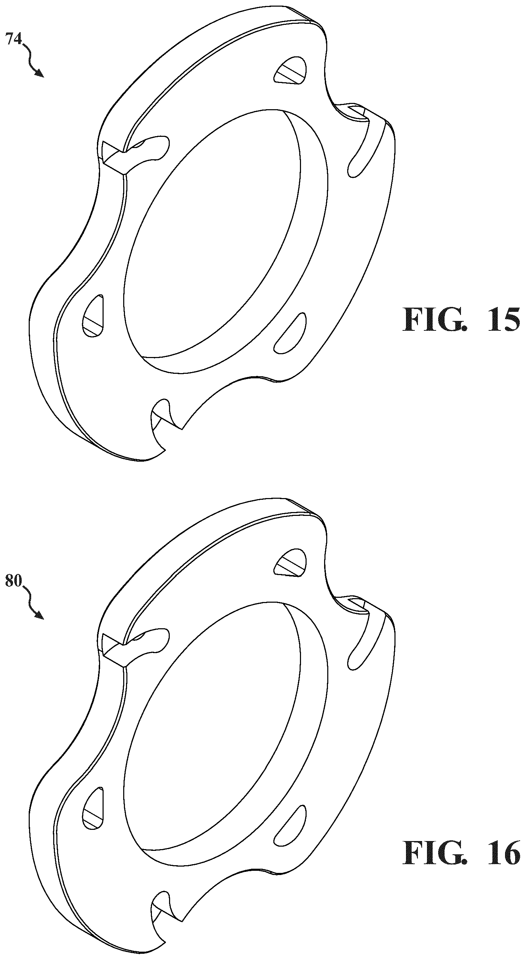

In another embodiment, as shown in FIGS. 10-16, the first impeller 74 may can have the first hub portion 102 and may include the first impeller arm 104 extending from the first hub portion 102 and away from the rotor axis RA with the first impeller arm 104 defining both the inlet opening 76 of the first impeller 74 and the outlet opening 78 of the first impeller 74. Similarly, the second impeller 80 may have the second hub portion and may include the first impeller arm 120 of the second impeller 80 extending from the second hub portion 118 and away from the rotor axis RA with the first impeller arm 120 of the second impeller 80 defining both the outlet opening 84 of the second impeller 80 and the inlet opening 82 of the second impeller 80.

As described above, the rotor 58 may define the third cooling duct 134 and the fourth cooling duct 136 with the first impeller 74 defining the second inlet opening 138 aligned with the third cooling duct 134 and the second outlet opening 140 aligned with the fourth cooling duct 136. The second impeller 80 may define the second inlet opening 142 aligned with the fourth cooling duct 136 and the second outlet opening 140 of the first impeller 74, and the second impeller 80 may define the second outlet opening 144 aligned with the third cooling duct 134 and the second inlet opening 138 of the first impeller 74.

In the embodiment shown in FIGS. 10-16, the second inlet opening 138 of the first impeller 74 has the inlet geometric center 146, which defines the second inlet radius R7 between the inlet geometric center 146 of the second inlet opening 138 of the first impeller 74 and the rotor axis RA. Similarly, the second outlet opening 144 of the second impeller 80 has the outlet geometric center 148, which defines the second outlet radius R8 between the outlet geometric center 148 of the second outlet opening 144 of the second impeller 80 and the rotor axis RA. The second inlet opening 142 of the second impeller 80 has the inlet geometric center 150, with the inlet geometric center 150 of the second inlet opening 142 of the second impeller 80 defining the second inlet radius R9 between the inlet geometric center 150 of the second inlet opening 142 of the second impeller 80 and the rotor axis RA. The second outlet opening 140 of the first impeller 74 has the outlet geometric center 152, and the outlet geometric center 152 of the second outlet opening 140 of the first impeller 74 defines a second outlet radius R10 between the outlet geometric center 152 of the second outlet opening 140 of the first impeller 74 and the rotor axis RA.

The second outlet radius R8 defined between the outlet geometric center 148 of the second outlet opening 144 of the second impeller 80 may be greater than the second inlet radius R7 defined between the inlet geometric center 146 of the second inlet opening 138 of the first impeller 74 such that the first and second impellers 74, 80 are adapted to direct air flow in the first direction through the third cooling duct 134 from the first rotor end 60 to the second rotor end 62 when the rotor 58, the first impeller 74, and the second impeller 80 rotate about the rotor axis RA. Similarly, the second outlet radius R10 defined between the outlet geometric center 152 of the second outlet opening 140 of the first impeller 74 may be greater than the second inlet radius R9 defined between the inlet geometric center 150 of the second inlet opening 142 of the second impeller 80 such that the first and second impellers 74, 80 are adapted to direct airflow in the second direction opposite the first direction through the fourth cooling duct 136 from the second rotor end 62 to the first rotor end 60 when the rotor 58, the first impeller 74, and the second impeller 80 rotate about the rotor axis RA

The first impeller 74 may include the second impeller arm 106 extending from the first hub portion 102 and away from the rotor axis RA, with the second impeller arm 106 defining the second inlet opening 138 of the first impeller 74 and the second outlet opening 140 of the first impeller 74. Similarly, the second impeller 80 may include the second impeller arm 122 extending from the second hub portion 118 and away from the rotor axis RA, with the second impeller arm 122 defining the second inlet opening 142 of the second impeller 80 and the second outlet opening 144 of the second impeller 80.

The rotor 58 shown in FIG. 10, which may be the same as the rotor 58 shown in FIGS. 2-4, may also define the fifth cooling duct 154 extending from the first rotor end 60 to the second rotor end 62, and the sixth cooling duct 156 extending from the first rotor end 60 to the second rotor end 62. With reference again to FIGS. 10-16, the first impeller 74 may define the third inlet opening 158 aligned with the fifth cooling duct 154, and the third outlet opening 160 aligned with the sixth cooling duct 156. The second impeller 80 may define the third inlet opening 162 aligned with the sixth cooling duct 156 and the third outlet opening 160 of the first impeller 74, and the third outlet opening 164 aligned with the fifth cooling duct 154 and the third inlet opening 158 of the first impeller 74.

The third inlet opening 158 of the first impeller 74 has an inlet geometric center 166, which defines the third inlet radius R11 between the inlet geometric center 166 of the third inlet opening 158 of the first impeller 74 and the rotor axis RA. Similarly, the third outlet opening 164 of the second impeller 80 has an outlet geometric center 168, which defines the third outlet radius R12 between the outlet geometric center 168 of the third outlet opening 164 of the second impeller 80 and the rotor axis RA. The third inlet opening 162 of the second impeller 80 has an inlet geometric center 170, which defines the third inlet radius R13 between the inlet geometric center 170 of the third inlet opening 162 of the second impeller 80 and the rotor axis RA. The third outlet opening 160 of the first impeller 74 has an outlet geometric center 172, which defines the third outlet radius R14 between the outlet geometric center 172 of the third outlet opening 160 of the first impeller 74 and the rotor axis RA.

Typically, the third outlet radius R12 defined between the outlet geometric center 168 of the third outlet opening 164 of the second impeller 80 is greater than the third inlet radius R11 defined between the inlet geometric center 166 of the third inlet opening 158 of the first impeller 74 such that the first and second impellers 74, 80 are adapted to direct air flow in the first direction through the fifth cooling duct 154 from the first rotor end 60 to the second rotor end 62 when the rotor 58, the first impeller 74, and the second impeller 80 rotate about the rotor axis RA. Similarly, the third outlet radius R14 defined between the outlet geometric center 172 of the third outlet opening 160 of the first impeller 74 is greater than the third inlet radius R13 defined between the inlet geometric center 170 of the third inlet opening 162 of the second impeller 80 such that the first and second impellers 74, 80 are adapted to direct airflow in the second direction opposite the first direction through the sixth cooling duct 156 from the second rotor end 62 to the first rotor end 60 when the rotor 58, the first impeller 74, and the second impeller 80 rotate about the rotor axis RA.

With continued reference to FIGS. 10-16, the first impeller 74 may include the third impeller arm 174 extending from the first hub portion 102 and away from the rotor axis RA, with the third impeller arm 174 defining the third inlet opening 158 of the first impeller 74 and the third outlet opening 160 of the first impeller 74. Similarly, the second impeller 80 may include the third impeller arm 182 extending from the second hub portion 118 and away from the rotor axis RA, with the third impeller arm 182 of the second impeller 80 defining the third inlet opening 162 of the second impeller 80 and the third outlet opening 164 of the second impeller 80.

It is to be appreciated that the first impeller 74 and second impeller 80 shown throughout the FIGS. may be mirrored components of one another with respect to the rotor axis RA. It is also to be appreciated that the first impeller 74 and the second impeller 80 may be replicas of one another with respect to the rotor axis RA.

As described above, the cross-sectional area of the inlet opening 76 with respect to the rotor axis RA defined by the first impeller 74 may be greater than the cross-sectional area of the outlet opening 84 defined by the second impeller 80. Similarly, when the first and second impellers 74, 80 define more than one inlet opening and outlet opening, the cross-sectional area of the inlet openings with respect to the rotor axis A defined by one of the first and second impellers 74, 80 may be less than the cross-sectional area of the outlet openings with respect to rotor axis A defined by the other of the first and second impellers 74, 80.

It is to be appreciated that the first and second impellers 74, 80 may have zero impeller arms, one impeller arm, two impeller arms, three impeller arms, four impeller arms, five impeller arms, six impeller arms, seven impeller arms, or eight or more impeller arms. Similarly, it is to be appreciated that each of the first and second impeller arms 74, 80 may have two cooling ducts, three cooling ducts, four cooling ducts, five cooling ducts, six cooling ducts, seven cooling ducts, or eight or more cooling ducts.

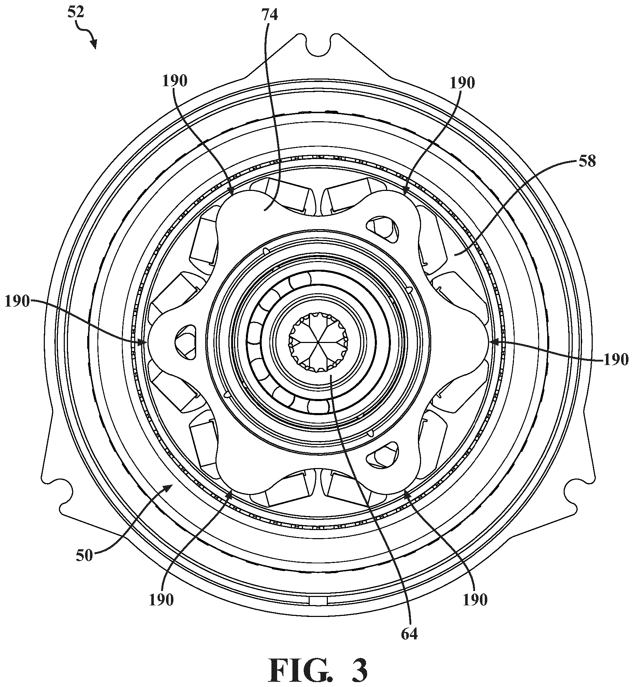

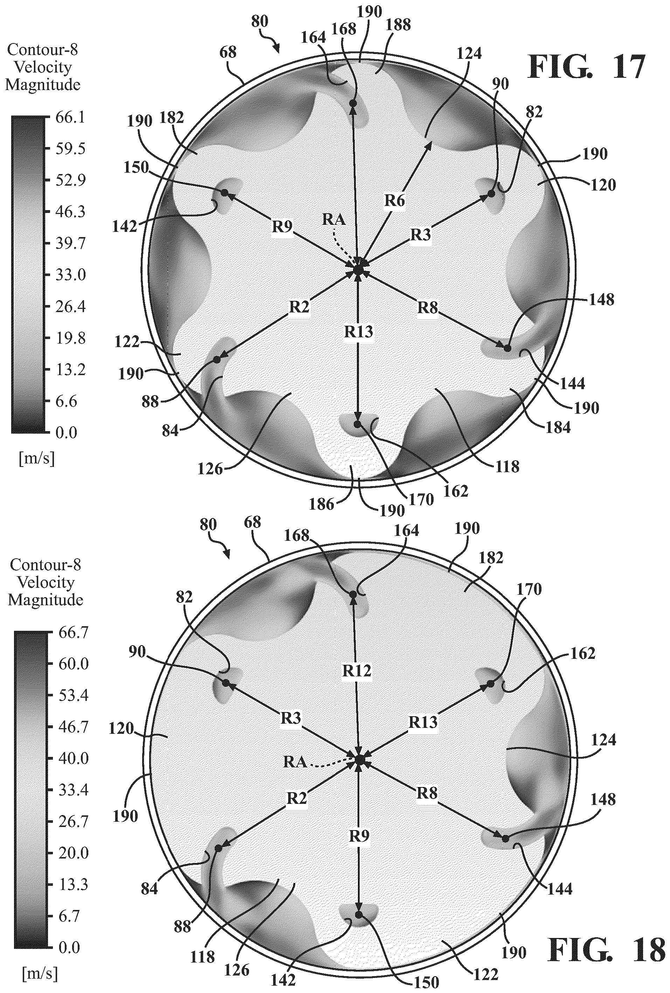

As shown in FIGS. 3, 17, and 18 and, the first impeller arm 104 of the first impeller 74 may define a vortex channel 190 between the first impeller arm 104 and the stator 68. It is to be appreciated that each of the impeller arms, for example the first impeller arm 104, the second impeller arm 106, and the third impeller arm 174 of the first impeller 74 may each define a vortex channel 190 between each respective impeller arm and the stator or another component of the electric machine 52. In embodiments where the first impeller 74 has the fourth impeller arm 176, the fifth impeller arm 178, and the sixth impeller arm 180, each of the impeller arms may define a vortex channel 190 between each respective impeller arm and the stator 68 or another component of the electric machine 52. When present, the vortex channel 190 may increase the flow rate of fluid through the first and second cooling ducts 70, 72 and, when present, the third, fourth, fifth, and/or sixth cooling ducts 134, 136, 154, and 156. Additionally, when present, the vortex channel 190 decreases air resistance against the first and second impellers 74, 76 to allow the first and second impellers 74, 76 and, therefore, the rotor 58 and shaft 64, to rotate at higher desired speeds. The thickness of the vortex channel 190 may be adjusted based on the intended mass flow rate through the first and second cooling ducts 70, 72 and, when present, the third, fourth, fifth, and/or sixth cooling ducts 134, 136, 154, and 156. For example, if higher mass flow rates are desired through the first and second cooling ducts 70, 72, the vortex channel 190 may be wider than when a lower mass flow rate is desired through the first and second cooling ducts 70, 72 and, when present, the third, fourth, fifth, and/or sixth cooling ducts 134, 136, 154, and 156.

It is also to be appreciated that a system including the electric machine 52 may also include a gear box heat exchanger. In such systems, the first impeller 74 and/or the second impeller 80 may be configured to direct airflow to the gear box heat exchanger for cooling the gearbox heat exchanger or any other component in the system.

Although the present invention has been described above and is defined in the attached claims, it should be understood that the invention may alternatively be defined in accordance with the following Statements:
Statement 1: A rotor assembly for use in an electric machine, said rotor assembly comprising:
   a rotor extending along and adapted to be rotatable about a rotor axis, wherein said rotor has a first rotor end and a second rotor end spaced from said first rotor end with respect to said rotor axis, wherein said rotor defines a first cooling duct extending from said first rotor end to said second rotor end, and wherein said rotor defines a second cooling duct extending from said first rotor end to said second rotor end;
   a first impeller coupled to said first rotor end, wherein said first impeller defines an inlet opening aligned with said first cooling duct, and wherein said first impeller defines an outlet opening aligned with said second cooling duct; and
   a second impeller coupled to said second rotor end such that said rotor is disposed between said first impeller and said second impeller with respect to said rotor axis, wherein said second impeller defines an inlet opening aligned with said second cooling duct and said outlet opening of said first impeller, and wherein said second impeller defines an outlet opening aligned with said first cooling duct and said inlet opening of said first impeller;
   wherein said inlet opening of said first impeller has an inlet geometric center, and wherein said inlet geometric center of said inlet opening of said first impeller defines a first inlet radius between said inlet geometric center of said inlet opening of said first impeller and said rotor axis,
   wherein said outlet opening of said second impeller has an outlet geometric center, and wherein said outlet geometric center of said outlet opening of said second impeller defines a first outlet radius between said outlet geometric center of said outlet opening of said second impeller and said rotor axis;
   wherein said inlet opening of said second impeller has an inlet geometric center, and wherein said inlet geometric center of said inlet opening of said second impeller defines a first inlet radius between said inlet geometric center of said inlet opening of said second impeller and said rotor axis;
   wherein said outlet opening of said first impeller has an outlet geometric center, and wherein said outlet geometric center of said outlet opening of said first impeller defines a first outlet radius between said outlet geometric center of said outlet opening of said first impeller and said rotor axis; and
   wherein said first outlet radius defined between said outlet geometric center of said outlet opening of said second impeller and said rotor axis is greater than said first inlet radius defined between said inlet geometric center of said inlet opening of said first impeller and said rotor axis such that said first and second impellers are adapted to direct air flow in a first direction through said first cooling duct from said first rotor end to said second rotor end when said rotor, said first impeller, and said second impeller rotate about said rotor axis, and wherein said first outlet radius defined between said outlet geometric center of said outlet opening of said first impeller and said rotor axis is greater than said first inlet radius defined between said inlet geometric center of said inlet opening of said second impeller and said rotor axis such that said first and second impellers are adapted to direct airflow in a second direction opposite said first direction through said second cooling duct from said second rotor end to said first rotor end when said rotor, said first impeller, and said second impeller rotate about said rotor axis.
Statement 2: The rotor assembly as set forth in statement 1, wherein said first impeller has a first hub portion, and wherein said first impeller comprises a first impeller arm extending from said first hub portion and away from said rotor axis and defining said inlet opening of said first impeller, and a second impeller arm extending from said first hub portion away from said rotor axis and defining said outlet opening of said first impeller.
Statement 3: The rotor assembly as set forth in any one of the preceding statements, wherein said first hub portion has an outer first hub surface disposed between said first and second impeller arms of said first impeller, wherein said outer first hub surface defines an outer first hub radius between said outer first hub surface and said rotor axis, and wherein said first and second impeller arms of said first impeller protrude away from said outer first hub surface with respect to said rotor axis.
Statement 4: The rotor assembly as set forth in statement 3, wherein said outlet opening of said first impeller is disposed outside of said outer first hub radius with respect to said rotor axis.
Statement 5: The rotor assembly as set forth in any one of the preceding statements, wherein said inlet opening of said first impeller is disposed outside of said outer first hub radius with respect to said rotor axis.
Statement 6: The rotor assembly as set forth in any one of the preceding statements, wherein said outlet opening of said first impeller has a curved or angled configuration with respect to said rotor axis.
Statement 7: The rotor assembly as set forth in statement 6, wherein said outlet opening of said first impeller is curved or angled in a clockwise configuration with respect to said rotor axis.
Statement 8: The rotor assembly as set forth in statement 6, wherein said outlet opening of said first impeller is curved or angled in a counterclockwise configuration with respect to said rotor axis.
Statement 9: The rotor assembly as set forth in one of statements 1-5, wherein said outlet opening of said first impeller has a straight configuration with respect to said rotor axis.
Statement 10: The rotor assembly as set forth in any one of the preceding statements, wherein said first impeller has a first impeller surface facing said rotor, and wherein outlet opening of said first impeller is defined by said first impeller surface of said first impeller.
Statement 11: The rotor assembly as set forth in statement 10, wherein said outlet opening of said first impeller is partially defined through said first impeller.
Statement 12: The rotor assembly as set forth in statement 11, wherein said first impeller has a second impeller surface opposite said first impeller surface of said first impeller with respect to said rotor axis, wherein said first impeller has a first impeller thickness defined between said first and second impeller surfaces of said first impeller, and wherein said outlet opening of said first impeller has an outlet depth with respect to said rotor axis that is less than said first impeller thickness.
Statement 13: The rotor assembly as set forth in any one of the preceding statements, wherein said inlet opening of said first impeller has a symmetrical configuration with respect to said rotor axis.
Statement 14: The rotor assembly as set forth in statement 13, wherein said inlet opening of said first impeller has a semi-circle configuration.
Statement 15: The rotor assembly as set forth in any one of the preceding statements, wherein said first impeller arm of said first impeller and said second impeller arm of said first impeller are radially spaced 180 degrees from one another with respect to said rotor axis.
Statement 16: The rotor assembly as set forth in any one of the preceding statements, wherein said second impeller has a second hub portion, and wherein said second impeller comprises a first impeller arm extending from said second hub portion and away from said rotor axis and defining said inlet opening of said second impeller, and a second impeller arm extending from said second hub portion away from said rotor axis and defining said outlet opening of said second impeller.
Statement 17: The rotor assembly as set forth in any one of the preceding statements, wherein said second hub portion has an outer second hub surface disposed between said first and second impeller arms of said second impeller, wherein said outer second hub surface defines an outer second hub radius between said outer second hub surface and said rotor axis, and wherein said first and second impeller arms of said second impeller protrude away from said outer second hub surface with respect to said rotor axis.
Statement 18: The rotor assembly as set forth in any one of the preceding statements, wherein said outlet opening of said second impeller is disposed outside of said outer second hub radius with respect to said rotor axis.
Statement 19: The rotor assembly as set forth in any one of the preceding statements, wherein said inlet opening of said second impeller is disposed outside of said outer second hub radius with respect to said rotor axis.
Statement 20: The rotor assembly as set forth in any one of the preceding statements, wherein said outlet opening of said second impeller has a curved or angled configuration with respect to said rotor axis.
Statement 21: The rotor assembly as set forth in statement 20, wherein said outlet opening of said second impeller is curved or angled in a clockwise configuration with respect to said rotor axis.
Statement 22: The rotor assembly as set forth in statement 20, wherein said outlet opening of said second impeller is curved or angled in a counterclockwise configuration with respect to said rotor axis.
Statement 23: The rotor assembly as set forth in one of statements 16-19, wherein said outlet opening of said second impeller has a straight configuration with respect to said rotor axis.
Statement 24: The rotor assembly as set forth in any one of the preceding statements, wherein said second impeller has a first impeller surface facing said rotor, and wherein outlet opening of said second impeller is defined by said first impeller surface of said second impeller.
Statement 25: The rotor assembly as set forth in statement 24, wherein said outlet opening of said second impeller is partially defined through said first impeller.
Statement 26: The rotor assembly as set forth in statement 25, wherein said second impeller has a second impeller surface opposite said first impeller surface of said second impeller with respect to said rotor axis, wherein said second impeller has a second impeller thickness defined between said first and second impeller surfaces of said second impeller, and wherein said outlet opening of said second impeller has an outlet depth with respect to said rotor axis that is less than said second impeller thickness.
Statement 27: The rotor assembly as set forth in any one of the preceding statements,
   wherein said rotor defines a third cooling duct extending from said first rotor end to said second rotor end, and a fourth cooling duct extending from said first rotor end to said second rotor end;
   wherein said first impeller defines a second inlet opening aligned with said third cooling duct, and wherein said first impeller defines a second outlet opening aligned with said fourth cooling duct; and
   wherein said second impeller defines second inlet opening aligned with said fourth cooling duct and said second outlet opening of said first impeller, and wherein said second impeller defines a second outlet opening aligned with said third cooling duct and said second inlet opening of said first impeller.
Statement 28: The rotor assembly as set forth in statement 27,
   wherein said second inlet opening of said first impeller has an inlet geometric center, and wherein said inlet geometric center of said second inlet opening of said first impeller defines a second inlet radius between said inlet geometric center of said second inlet opening of said first impeller and said rotor axis,
   wherein said second outlet opening of said second impeller has an outlet geometric center, and wherein said outlet geometric center of said second outlet opening of said second impeller defines a second outlet radius between said outlet geometric center of said second outlet opening of said second impeller and said rotor axis;
   wherein said second inlet opening of said second impeller has an inlet geometric center, and wherein said inlet geometric center of said second inlet opening of said second impeller defines a second inlet radius between said inlet geometric center of said second inlet opening of said second impeller and said rotor axis; and
   wherein second outlet opening of said first impeller has an outlet geometric center, and wherein said outlet geometric center of said second outlet opening of said first impeller defines a second outlet radius between said outlet geometric center of said second outlet opening of said first impeller and said rotor axis.
Statement 29: The rotor assembly as set forth in statement 28, wherein said second outlet radius defined between said outlet geometric center of said second outlet opening of said second impeller is greater than said second inlet radius defined between said inlet geometric center of said second inlet opening of said first impeller such that said first and second impellers are adapted to direct air flow in said first direction through said third cooling duct from said first rotor end to said second rotor end when said rotor, said first impeller, and said second impeller rotate about said rotor axis, and wherein said second outlet radius defined between said outlet geometric center of said second outlet opening of said first impeller is greater than said second inlet radius defined between said inlet geometric center of said second inlet opening of said second impeller such that said first and second impellers are adapted to direct airflow in said second direction opposite said first direction through said fourth cooling duct from said second rotor end to said first rotor end when said rotor, said first impeller, and said second impeller rotate about said rotor axis.
Statement 30: The rotor assembly as set forth in any one statements 27-29,
   wherein said rotor defines a fifth cooling duct extending from said first rotor end to said second rotor end, and a sixth cooling duct extending from said first rotor end to said second rotor end;
   wherein said first impeller defines a third inlet opening aligned with said fifth cooling duct, and wherein said first impeller defines a third outlet opening aligned with said sixth cooling duct; and
   wherein said second impeller defines third inlet opening aligned with said sixth cooling duct and said third outlet opening of said first impeller, and wherein said second impeller defines a third outlet opening aligned with said fifth cooling duct and said third inlet opening of said first impeller.
Statement 31: The rotor assembly as set forth in statement 30,
   wherein said third inlet opening of said first impeller has an inlet geometric center, and wherein said inlet geometric center of said third inlet opening of said first impeller defines a third inlet radius between said inlet geometric center of said third inlet opening of said first impeller and said rotor axis,
   wherein said third outlet opening of said second impeller has an outlet geometric center, and wherein said outlet geometric center of said third outlet opening of said second impeller defines a third outlet radius between said outlet geometric center of said third outlet opening of said second impeller and said rotor axis;
   wherein said third inlet opening of said second impeller has an inlet geometric center, and wherein said inlet geometric center of said third inlet opening of said second impeller defines a third inlet radius between said inlet geometric center of said third inlet opening of said second impeller and said rotor axis; and
   wherein third outlet opening of said first impeller has an outlet geometric center, and wherein said outlet geometric center of said third outlet opening of said first impeller defines a third outlet radius between said outlet geometric center of said third outlet opening of said first impeller and said rotor axis.
Statement 32: The rotor assembly as set forth in statement 31, wherein said third outlet radius defined between said outlet geometric center of said third outlet opening of said second impeller is greater than said third inlet radius defined between said inlet geometric center of said third inlet opening of said first impeller such that said first and second impellers are adapted to direct air flow in said first direction through said fifth cooling duct from said first rotor end to said second rotor end when said rotor, said first impeller, and said second impeller rotate about said rotor axis, and wherein said third outlet radius defined between said outlet geometric center of said third outlet opening of said first impeller is greater than said third inlet radius defined between said inlet geometric center of said third inlet opening of said second impeller such that said first and second impellers are adapted to direct airflow in said second direction opposite said first direction through said sixth cooling duct from said second rotor end to said first rotor end when said rotor, said first impeller, and said second impeller rotate about said rotor axis.
Statement 33: The rotor assembly as set forth in any one of statements 27-32, wherein said first inlet opening of said first impeller, said first outlet opening of said first impeller, said second inlet opening of said first impeller, said second outlet opening of said first impeller, said third inlet opening of said first impeller, and said third outlet opening of said first impeller are equally radially spaced from one another with respect to and about said rotor axis.
Statement 34: The rotor assembly as set forth in any one of statements 27-33, wherein said first inlet opening of said second impeller, said first outlet opening of said second impeller, said second inlet opening of said second impeller, said second outlet opening of said second impeller, said third inlet opening of said second impeller, and said third outlet opening of said second impeller are equally radially spaced from one another with respect to and about said rotor axis.
Statement 35: The rotor assembly as set forth in any one of statements 27-34, wherein said first impeller comprises a third impeller arm extending from said first hub portion and away from said rotor axis and defining said second inlet opening of said first impeller, a fourth impeller arm extending from said first hub portion away from said rotor axis and defining said second outlet opening of said first impeller, a fifth impeller arm extending from said first hub portion away from said rotor axis and defining said third inlet opening of said first impeller, and a sixth impeller arm extending from said first hub portion away from said rotor axis and defining said third outlet opening of said first impeller.
Statement 36: The rotor assembly as set forth in any one of statements 27-35, wherein said second impeller comprises a third impeller arm extending from said second hub portion and away from said rotor axis and defining said second inlet opening of said second impeller, a fourth impeller arm extending from said second hub portion away from said rotor axis and defining said second outlet opening of said second impeller, a fifth impeller arm extending from said second hub portion away from said rotor axis and defining said third inlet opening of said second impeller, and a sixth impeller arm extending from said second hub portion away from said rotor axis and defining said third outlet opening of said second impeller.
Statement 37: The rotor assembly as set forth in statement 1, wherein said first impeller has a first hub portion, and wherein said first impeller comprises a first impeller arm extending from said first hub portion and away from said rotor axis and defining said inlet opening of said first impeller and said outlet opening of said first impeller.
Statement 38: The rotor assembly as set forth in statement 37, wherein said second impeller has a second hub portion, and wherein said second impeller comprises a first impeller arm extending from said second hub portion and away from said rotor axis and defining said outlet opening of said second impeller and said inlet opening of said second impeller.
Statement 39: The rotor assembly as set forth in any one of statements 37 and 38,
   wherein said rotor defines a third cooling duct extending from said first rotor end to said second rotor end, and a fourth cooling duct extending from said first rotor end to said second rotor end;
   wherein said first impeller defines a second inlet opening aligned with said third cooling duct, and wherein said first impeller defines a second outlet opening aligned with said fourth cooling duct; and
   wherein said second impeller defines a second inlet opening aligned with said fourth cooling duct and said second outlet opening of said first impeller, and wherein said second impeller defines a second outlet opening aligned with said third cooling duct and said second inlet opening of said first impeller.
Statement 40: The rotor assembly as set forth in any one of statements 37-39,
   wherein said second inlet opening of said first impeller has an inlet geometric center, and wherein said inlet geometric center of said second inlet opening of said first impeller defines a second inlet radius between said inlet geometric center of said second inlet opening of said first impeller and said rotor axis,
   wherein said second outlet opening of said second impeller has an outlet geometric center, and wherein said outlet geometric center of said second outlet opening of said second impeller defines a second outlet radius between said outlet geometric center of said second outlet opening of said second impeller and said rotor axis;
   wherein said second inlet opening of said second impeller has an inlet geometric center, and wherein said inlet geometric center of said second inlet opening of said second impeller defines a second inlet radius between said inlet geometric center of said second inlet opening of said second impeller and said rotor axis; and
   wherein second outlet opening of said first impeller has an outlet geometric center, and wherein said outlet geometric center of said second outlet opening of said first impeller defines a second outlet radius between said outlet geometric center of said second outlet opening of said first impeller and said rotor axis.
Statement 41: The rotor assembly as set forth in statement 40, wherein said second outlet radius defined between said outlet geometric center of said second outlet opening of said second impeller is greater than said second inlet radius defined between said inlet geometric center of said second inlet opening of said first impeller such that said first and second impellers are adapted to direct air flow in said first direction through said third cooling duct from said first rotor end to said second rotor end when said rotor, said first impeller, and said second impeller rotate about said rotor axis, and wherein said second outlet radius defined between said outlet geometric center of said second outlet opening of said first impeller is greater than said second inlet radius defined between said inlet geometric center of said second inlet opening of said second impeller such that said first and second impellers are adapted to direct airflow in said second direction opposite said first direction through said fourth cooling duct from said second rotor end to said first rotor end when said rotor, said first impeller, and said second impeller rotate about said rotor axis.
Statement 42: The rotor assembly as set forth in any one of statements 37-41, wherein said first impeller comprises a second impeller arm extending from said first hub portion and away from said rotor axis and defining said second inlet opening of said first impeller and said second outlet opening of said first impeller, and wherein said second impeller comprises a second impeller arm extending from said second hub portion and away from said rotor axis and defining said second inlet opening of said second impeller and said second outlet opening of said second impeller.
Statement 43: The rotor assembly as set forth in any one of statements 39-42,
   wherein said rotor defines a fifth cooling duct extending from said first rotor end to said second rotor end, and a sixth cooling duct extending from said first rotor end to said second rotor end;
   wherein said first impeller defines a third inlet opening aligned with said fifth cooling duct, and wherein said first impeller defines a third outlet opening aligned with said sixth cooling duct; and
   wherein said second impeller defines third inlet opening aligned with said sixth cooling duct and said third outlet opening of said first impeller, and wherein said second impeller defines a third outlet opening aligned with said fifth cooling duct and said third inlet opening of said first impeller.
Statement 44: The rotor assembly as set forth in statement 43,
   wherein said third inlet opening of said first impeller has an inlet geometric center, and wherein said inlet geometric center of said third inlet opening of said first impeller defines a third inlet radius between said inlet geometric center of said third inlet opening of said first impeller and said rotor axis,
   wherein said third outlet opening of said second impeller has an outlet geometric center, and wherein said outlet geometric center of said third outlet opening of said second impeller defines a third outlet radius between said outlet geometric center of said third outlet opening of said second impeller and said rotor axis;
   wherein said third inlet opening of said second impeller has an inlet geometric center, and wherein said inlet geometric center of said third inlet opening of said second impeller defines a third inlet radius between said inlet geometric center of said third inlet opening of said second impeller and said rotor axis; and
   wherein third outlet opening of said first impeller has an outlet geometric center, and wherein said outlet geometric center of said third outlet opening of said first impeller defines a third outlet radius between said outlet geometric center of said third outlet opening of said first impeller and said rotor axis.
Statement 45: The rotor assembly as set forth in statement 44, wherein said third outlet radius defined between said outlet geometric center of said third outlet opening of said second impeller is greater than said third inlet radius defined between said inlet geometric center of said third inlet opening of said first impeller such that said first and second impellers are adapted to direct air flow in said first direction through said fifth cooling duct from said first rotor end to said second rotor end when said rotor, said first impeller, and said second impeller rotate about said rotor axis, and wherein said third outlet radius defined between said outlet geometric center of said third outlet opening of said first impeller is greater than said third inlet radius defined between said inlet geometric center of said third inlet opening of said second impeller such that said first and second impellers are adapted to direct airflow in said second direction opposite said first direction through said sixth cooling duct from said second rotor end to said first rotor end when said rotor, said first impeller, and said second impeller rotate about said rotor axis.
Statement 46: The rotor assembly as set forth in any one of statements 43-45, wherein said first impeller comprises a third impeller arm extending from said first hub portion and away from said rotor axis and defining said third inlet opening of said first impeller and said third outlet opening of said first impeller, and wherein said second impeller comprises a third impeller arm extending from said second hub portion and away from said rotor axis and defining said third inlet opening of said second impeller and said third outlet opening of said second impeller.
Statement 47: The rotor assembly as set forth in any one of the preceding statements, wherein said first impeller and second impeller are mirrored components with respect to the rotor axis.
Statement 48: The rotor assembly as set forth in any one of the preceding statements, wherein said first impeller, said second impeller, and said rotor are adapted to rotate in unison about said rotor axis.
Statement 49: The rotor assembly as set forth in any one of the preceding statements, wherein said first rotor end has a first rotor face and said second rotor end has a second rotor face facing opposite said first rotor face with respect to said rotor axis, and wherein said first impeller is engaged with said first rotor face and said second impeller is engaged with said second rotor face.
Statement 50: The rotor assembly as set forth in any one of the preceding statements further comprising a plurality of magnets disposed in said rotor.
Statement 51: The rotor assembly as set forth in statement 50, wherein said rotor defines a plurality of magnet channels adjacent said magnets, and wherein said plurality of magnet channels are filled with an injection molded material.
Statement 52: The rotor assembly as set forth in statement 50, wherein said plurality of magnet channels are hollow.
Statement 53: The rotor assembly as set forth in statement 52, wherein said first impeller defines a magnet opening configured to align with at least one of said magnet channels of said plurality of magnet channels, and wherein said second impeller defines a magnet opening configured to align with at least one of said magnet channels of said plurality of magnet channels.
Statement 54: An electric machine comprising said rotor assembly as set forth in any one of the preceding statements, and further comprising:
   a shaft extending along said rotor axis, wherein said rotor defines a rotor interior and said shaft is disposed in said rotor interior and coupled to said rotor; and
   a stator coupled to and disposed about said rotor with respect to said rotor axis.
Statement 55: The electric machine as set forth in statement 54, wherein said first impeller arm of said first impeller defines a vortex channel between said first impeller arm and said stator.
Statement 56: A system comprising said electric machine as set forth in any one of statements 54 and 55, and further comprising a gear box heat exchanger, wherein said first and second impellers are configured to direct airflow to said gear box heat exchanger for cooling said gear bod heat exchanger.

## Claims

1. A rotor assembly for use in an electric machine, said rotor assembly comprising:
a rotor extending along and adapted to be rotatable about a rotor axis, wherein said rotor has a first rotor end and a second rotor end spaced from said first rotor end with respect to said rotor axis, wherein said rotor defines a first cooling duct extending from said first rotor end to said second rotor end, and wherein said rotor defines a second cooling duct extending from said first rotor end to said second rotor end;
a first impeller coupled to said first rotor end, wherein said first impeller defines an inlet opening aligned with said first cooling duct, and wherein said first impeller defines an outlet opening aligned with said second cooling duct; and
a second impeller coupled to said second rotor end such that said rotor is disposed between said first impeller and said second impeller with respect to said rotor axis, wherein said second impeller defines an inlet opening aligned with said second cooling duct and said outlet opening of said first impeller, and wherein said second impeller defines an outlet opening aligned with said first cooling duct and said inlet opening of said first impeller;
wherein said inlet opening of said first impeller has an inlet geometric center, and wherein said inlet geometric center of said inlet opening of said first impeller defines a first inlet radius between said inlet geometric center of said inlet opening of said first impeller and said rotor axis;
wherein said outlet opening of said second impeller has an outlet geometric center, and wherein said outlet geometric center of said outlet opening of said second impeller defines a first outlet radius between said outlet geometric center of said outlet opening of said second impeller and said rotor axis;
wherein said inlet opening of said second impeller has an inlet geometric center, and wherein said inlet geometric center of said inlet opening of said second impeller defines a first inlet radius between said inlet geometric center of said inlet opening of said second impeller and said rotor axis;
wherein said outlet opening of said first impeller has an outlet geometric center, and wherein said outlet geometric center of said outlet opening of said first impeller defines a first outlet radius between said outlet geometric center of said outlet opening of said first impeller and said rotor axis; and
wherein said first outlet radius defined between said outlet geometric center of said outlet opening of said second impeller and said rotor axis is greater than said first inlet radius defined between said inlet geometric center of said inlet opening of said first impeller and said rotor axis such that said first and second impellers are adapted to direct air flow in a first direction through said first cooling duct from said first rotor end to said second rotor end when said rotor, said first impeller, and said second impeller rotate about said rotor axis, and wherein said first outlet radius defined between said outlet geometric center of said outlet opening of said first impeller and said rotor axis is greater than said first inlet radius defined between said inlet geometric center of said inlet opening of said second impeller and said rotor axis such that said first and second impellers are adapted to direct airflow in a second direction opposite said first direction through said second cooling duct from said second rotor end to said first rotor end when said rotor, said first impeller, and said second impeller rotate about said rotor axis.

2. The rotor assembly as set forth in claim 1, wherein said first impeller has a first hub portion, and wherein said first impeller comprises a first impeller arm extending from said first hub portion and away from said rotor axis and defining said inlet opening of said first impeller, and a second impeller arm extending from said first hub portion away from said rotor axis and defining said outlet opening of said first impeller.

3. The rotor assembly as set forth in any one of the preceding claims, wherein said first impeller has a first impeller surface facing said rotor, and wherein outlet opening of said first impeller is defined by said first impeller surface of said first impeller.

4. The rotor assembly as set forth in claim 3, wherein said outlet opening of said first impeller is partially defined through said first impeller, wherein said first impeller has a second impeller surface opposite said first impeller surface of said first impeller with respect to said rotor axis, wherein said first impeller has a first impeller thickness defined between said first and second impeller surfaces of said first impeller, and wherein said outlet opening of said first impeller has an outlet depth with respect to said rotor axis that is less than said first impeller thickness.

5. The rotor assembly as set forth in any one of the preceding claims, wherein said second impeller has a second hub portion, and wherein said second impeller comprises a first impeller arm extending from said second hub portion and away from said rotor axis and defining said inlet opening of said second impeller, and a second impeller arm extending from said second hub portion away from said rotor axis and defining said outlet opening of said second impeller.

6. The rotor assembly as set forth in any one of the preceding claims, wherein said second impeller has a first impeller surface facing said rotor, and wherein outlet opening of said second impeller is defined by said second impeller surface of said second impeller, optionally wherein said outlet opening of said second impeller is partially defined through said first impeller, wherein said second impeller has a second impeller surface opposite said first impeller surface of said second impeller with respect to said rotor axis, wherein said second impeller has a second impeller thickness defined between said first and second impeller surfaces of said second impeller, and wherein said outlet opening of said second impeller has an outlet depth with respect to said rotor axis that is less than said second impeller thickness.

7. The rotor assembly as set forth in any one of the preceding claims,
wherein said rotor defines a third cooling duct extending from said first rotor end to said second rotor end, and a fourth cooling duct extending from said first rotor end to said second rotor end,
wherein said first impeller defines a second inlet opening aligned with said third cooling duct, and wherein said first impeller defines a second outlet opening aligned with said fourth cooling duct, and
wherein said second impeller defines second inlet opening aligned with said fourth cooling duct and said second outlet opening of said first impeller, and wherein said second impeller defines a second outlet opening aligned with said third cooling duct and said second inlet opening of said first impeller.

8. The rotor assembly as set forth in claim 7,
wherein said second inlet opening of said first impeller has an inlet geometric center, and wherein said inlet geometric center of said second inlet opening of said first impeller defines a second inlet radius between said inlet geometric center of said second inlet opening of said first impeller and said rotor axis,
wherein said second outlet opening of said second impeller has an outlet geometric center, and wherein said outlet geometric center of said second outlet opening of said second impeller defines a second outlet radius between said outlet geometric center of said second outlet opening of said second impeller and said rotor axis,
wherein said second inlet opening of said second impeller has an inlet geometric center, and wherein said inlet geometric center of said second inlet opening of said second impeller defines a second inlet radius between said inlet geometric center of said second inlet opening of said second impeller and said rotor axis, and
wherein second outlet opening of said first impeller has an outlet geometric center, and wherein said outlet geometric center of said second outlet opening of said first impeller defines a second outlet radius between said outlet geometric center of said second outlet opening of said first impeller and said rotor axis, and
optionally, wherein said second outlet radius defined between said outlet geometric center of said second outlet opening of said second impeller is greater than said second inlet radius defined between said inlet geometric center of said second inlet opening of said first impeller such that said first and second impellers are adapted to direct air flow in said first direction through said third cooling duct from said first rotor end to said second rotor end when said rotor, said first impeller, and said second impeller rotate about said rotor axis, and wherein said second outlet radius defined between said outlet geometric center of said second outlet opening of said first impeller is greater than said second inlet radius defined between said inlet geometric center of said second inlet opening of said second impeller such that said first and second impellers are adapted to direct airflow in said second direction opposite said first direction through said fourth cooling duct from said second rotor end to said first rotor end when said rotor, said first impeller, and said second impeller rotate about said rotor axis.

9. The rotor assembly as set forth in any one of claims 7 and 8,
wherein said first impeller comprises a third impeller arm extending from said first hub portion and away from said rotor axis and defining said second inlet opening of said first impeller, and a fourth impeller arm extending from said first hub portion away from said rotor axis and defining said second outlet opening of said first impeller, and
wherein said second impeller comprises a third impeller arm extending from said second hub portion and away from said rotor axis and defining said second inlet opening of said second impeller, and a fourth impeller arm extending from said second hub portion away from said rotor axis and defining said second outlet opening of said second impeller.

10. The rotor assembly as set forth in claim 1,
wherein said first impeller has a first hub portion and comprises a first impeller arm extending from said first hub portion and away from said rotor axis and defining said inlet opening of said first impeller and said outlet opening of said first impeller,
wherein said second impeller has a second hub portion and comprises a first impeller arm extending from said second hub portion and away from said rotor axis and defining said outlet opening of said second impeller and said inlet opening of said second impeller,
wherein said rotor defines a third cooling duct extending from said first rotor end to said second rotor end, and a fourth cooling duct extending from said first rotor end to said second rotor end,
wherein said first impeller defines a second inlet opening aligned with said third cooling duct, and wherein said first impeller defines a second outlet opening aligned with said fourth cooling duct,
wherein said second impeller defines a second inlet opening aligned with said fourth cooling duct and said second outlet opening of said first impeller, and wherein said second impeller defines a second outlet opening aligned with said third cooling duct and said second inlet opening of said first impeller,
wherein said second outlet radius defined between said outlet geometric center of said second outlet opening of said second impeller is greater than said second inlet radius defined between said inlet geometric center of said second inlet opening of said first impeller such that said first and second impellers are adapted to direct air flow in said first direction through said third cooling duct from said first rotor end to said second rotor end when said rotor, said first impeller, and said second impeller rotate about said rotor axis, and
wherein said second outlet radius defined between said outlet geometric center of said second outlet opening of said first impeller is greater than said second inlet radius defined between said inlet geometric center of said second inlet opening of said second impeller such that said first and second impellers are adapted to direct airflow in said second direction opposite said first direction through said fourth cooling duct from said second rotor end to said first rotor end when said rotor, said first impeller, and said second impeller rotate about said rotor axis.

11. The rotor assembly as set forth in claim 10, wherein said first impeller comprises a second impeller arm extending from said first hub portion and away from said rotor axis and defining said second inlet opening of said first impeller and said second outlet opening of said first impeller, and wherein said second impeller comprises a second impeller arm extending from said second hub portion and away from said rotor axis and defining said second inlet opening of said second impeller and said second outlet opening of said second impeller.

12. The rotor assembly as set forth in any one of the preceding claims, wherein said first rotor end has a first rotor face and said second rotor end has a second rotor face facing opposite said first rotor face with respect to said rotor axis, and wherein said first impeller is engaged with said first rotor face and said second impeller is engaged with said second rotor face.

13. The rotor assembly as set forth in any one of the preceding claims further comprising a plurality of magnets disposed in said rotor, wherein said rotor defines a plurality of magnet channels adjacent said magnets, wherein said plurality of magnet channels are hollow, and wherein said first impeller defines a magnet opening configured to align with at least one of said magnet channels of said plurality of magnet channels, and wherein said second impeller defines a magnet opening configured to align with at least one of said magnet channels of said plurality of magnet channels.

14. An electric machine comprising said rotor assembly as set forth in any one of the preceding claims, and further comprising:
a shaft extending along said rotor axis, wherein said rotor defines a rotor interior and said shaft is disposed in said rotor interior and coupled to said rotor; and
a stator coupled to and disposed about said rotor with respect to said rotor.

15. The electric machine as set forth in claim 14, wherein said first impeller arm of said first impeller defines a vortex channel between said first impeller arm and said stator.
